# EUROPEAN PATENT SPECIFICATION

(11) **EP 1 157 508 B1**
(45) Date of publication and mention of the grant of the patent: **27.01.2010**
(21) Application number: 00904144.3
(22) Date of filing: 02.02.2000
(51) Int. Cl.: H04L 12/66

(54) **AN ARRANGEMENT FOR DISTRIBUTING AND DESPATCHING TRAFFIC IN A NETWORK, ESPECIALLY H.323 GENERATED TRAFFIC**
VORRICHTUNG ZUM VERTEILEN ZUTEILEN VON INSBESONDERE H.323 GENERIERTEM VERKEHR
DISPOSITIF DE DISTRIBUTION ET REPARTITION DU TRAFIC DANS UN RESEAU, ET SPECIFIQUEMENT DU TRAFIC GENERE PAR H.323

(30) Priority: 09.02.1999 NO 990593; 31.08.1999 US 387355
(43) Date of publication of application: 28.11.2001
(73) Proprietor: TELEFONAKTIEBOLAGET LM ERICSSON (publ), 164 83 Stockholm (SE)
(72) Inventor: CORNELIUSSEN, Knut, Snorre, Bach, N-0273 Oslo (NO); KLILAND, Kevin, N-1400 Ski (NO); IVELAND, Espen, N-3045 Drammen (NO); SKJAERAN, Espen, N-0190 Oslo (NO)
(74) Representative: HOFFMANN EITLE
(86) International application number: PCT/NO2000/000030
(87) International publication number: WO 2000/048368

(56) References cited:
- WO-A-98/17048
- RADHIKA R. ROY: "Framework for H.323 Inter-Gatekeeper Communications" TELECOMMUNICATION STANDARDIZATION SECTOR APC-1385, 8 - 11 June 1998, pages 1-8, XP002900978 Cannes, FR.
- RADHIKA R. ROY: "Distributed Gatekeeper Architecture for H.323-based Multimedia Telephony" IEEE CONFERENCE ON LOCAL COMPUTER NETWORKS, LCN'99, 1999, pages 73-76, XP002900979
- SENTHIL SENGODAN: "On the Use of Multicast Scope for Gatekeeper Discovery" TELECOMMUNICATION STANDARDIZATION SECTOR APC-1382, June 1998 (1998-06), pages 1-4, XP002900980 Cannes, FR.

## Description

### Field of the invention

The present invention relates to an arrangement for distributing and dispatching traffic in a network, especially H.323 generated traffic, which arrangement comprises one or more gatekeepers, here designated as so-called external or real gatekeepers.

### The problem areas

Today there does not exist any lightweight solution for distributing and dispatching H.323 generated traffic.

### Known solutions and problems with these

It is perfectly possible to distribute and dispatch H.323 by using a gatekeeper. It might however be costly to run a full fledge gatekeeper for distributing and dispatching H.323 generated traffic if the intention *only* is to distribute and dispatch H.323 generated traffic. A real gatekeeper is complex and has to know about lots of messages etc. described in H.323. An endpoint may be any kind of H.323 based equipment.

The topic of using inter-gatekeepers or distributed gatekeepers are discussed in among others: RADHIKA R. ROY: "Framework for H.323 Inter-Gatekeeper Communications" Telecommunication Standardisation Sector APC 1385, 8 - 11 June 1998, pages 1-8 Cannes, France and RADHIKA R. ROY "Distributed Gatekeeper Architecture for H.323-based Multimedia Telephony", IEEE Conference on Local Computer Networks, LCN'99, 1999, pages 73-76.

### Objects of the invention

An object of the present invention is to provide an arrangement by which the distribution and despatch of H.323 generated traffic can be provided in a far more expedient and less costly manner.

Another object of the present invention is to provide an arrangement by which endpoints can be put in contact with so-points understand version 2 of the protocol, and interpret the message fields. This solution is not applicable for load balancing, as it has no mechanism for one real gatekeeper to know of the other, or any mechanism to report load between them.

### Objects of the invention

An object of the present invention is to provide an arrangement by which the distribution and dispatch of H.323 generated traffic can be provided in a far more expedient and less costly manner.

Another object of the present invention is to provide an arrangement by which endpoints can be put in contact with so-called external or real gatekeepers without having to be reconfigured depending on which gatekeeper they want to communicate with.

A further object of the present invention is to provide an arrangement by which supplementary achievements, comprising for example load balancing, QoS (Quality of Service), information about cost, etc. can easily be implemented.

Still another object of the present invention is to provide an arrangement by which the messages associated with so-called external or real gatekeepers are utilised in a rational and effective manner.

How to achieve supplementary achievements as e.g. load balancing is also described in the text below. Some of the ways described here not only involves GRQ, GCF and GRJ.

Further features and advantages of the present invention will appear from the following description taken in conjunction with the enclosed drawings.

### Brief description of the drawings

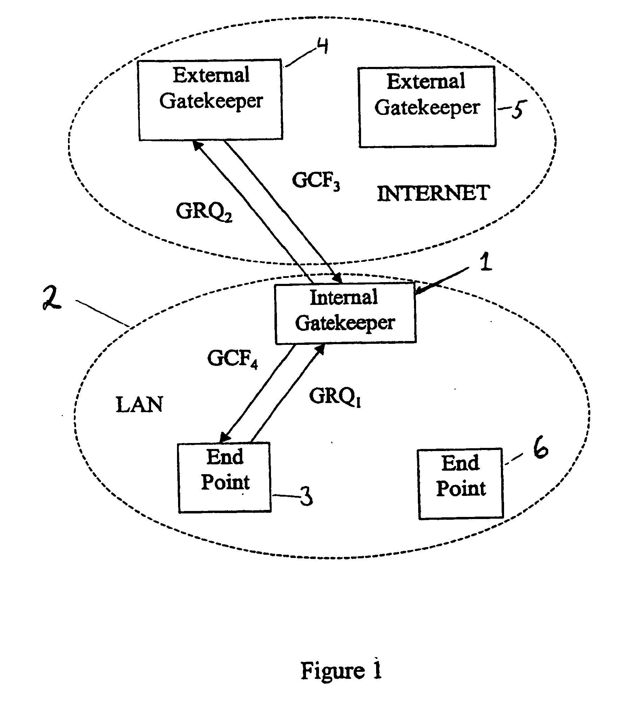

Figure 1A is a sketch of a typical scenario in which the distributed gatekeeper system might be utilised with endpoints, internal (lightweight) gatekeeper located inside the domain or LAN and external (real) Gatekeepers located outside. The network components as e.g. routers etc. are not outlined.

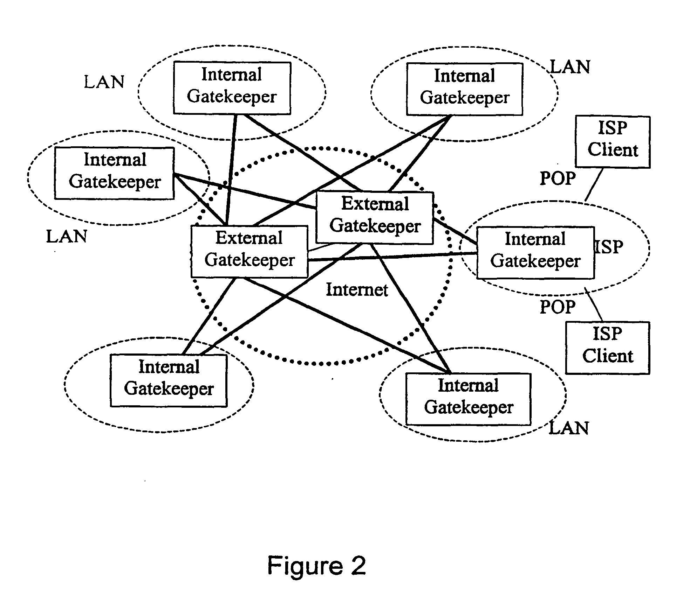

Figure 2A is a network scenario in which the distributed gatekeeper system *may* be applied. Not all of the components within the ISP domain are outlined, nor is network-related equipment as e.g. routers etc. outlined. An example of a LAN domain is sketched in Figure 1. The internal gatekeepers may be connected in any way and any number towards the external gatekeepers. An arbitrary number of external gatekeepers may be connected.

### Detailed description of embodiments

An endpoint that wants to initiate a session towards another endpoint has first to register to a gatekeeper. An endpoint performs this by sending a GRQ (see Figure 1 GRQ₁) to the lightweight gatekeeper. The lightweight gatekeeper only understands and responds to GRQs. As the lightweight gatekeeper also has knowledge of real gatekeepers outside its own domain, it responds to the endpoint with a GCF (see Figure 1 GRQ₄) with the gatekeeper id of an appropriate full fledge gatekeeper outside its own domain. In advance the lightweight gatekeeper must have gained knowledge of valid

Further features and advantages of the present invention will appear from the following description taken in conjunction with the enclosed drawings.

### Brief description of the drawings

Figure 1 is a sketch of a typical scenario in which the distributed gatekeeper system might be utilised with endpoints, internal (lightweight) gatekeeper located inside the domain or LAN and external (real) Gatekeepers located outside. The network components as e.g. routers etc. are not outlined.
Figure 2 is a network scenario in which the distributed gatekeeper system may be applied. Not all of the components within the ISP domain are outlined, neither is network-related equipment as e.g. routers etc. outlined. An example of a LAN domain is sketched in Figure 1. The internal gatekeepers may be connected in any way and any number towards the external gatekeepers. An arbitrary number of external gatekeepers may be connected.
Figure 3 shows the message exchange during start up of a real gatekeeper, when the real gatekeeper register a lightweight gatekeeper.
Figure 4 shows the message transfer in communication between real and lightweight gatekeeper, as the lightweight gatekeeper collects information relating to e.g. the load situation of the real gatekeeper.

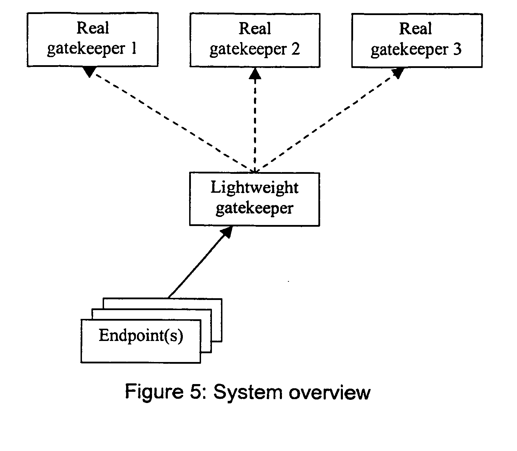

Figure 5 gives a system overview.

### Detailed description of embodiments

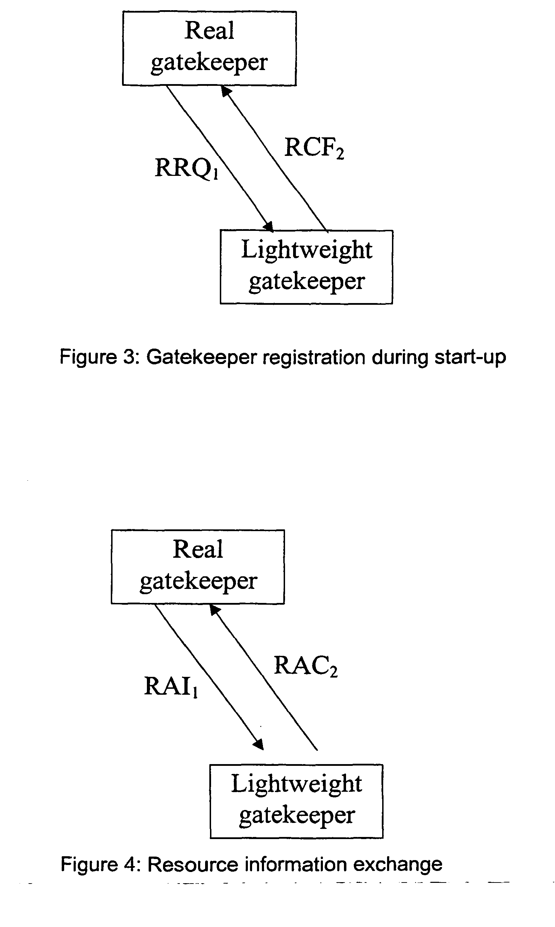

An endpoint that wants to initiate a session towards another endpoint has first to register to a gatekeeper. An endpoint performs this by sending a GRQ (see Figure 1 GRQ₁) to the lightweight gatekeeper. The lightweight gatekeeper only understands and responds to GRQs. As the lightweight gatekeeper also has knowledge of real gatekeepers outside its own domain, it responds to the endpoint with a GCF (see Figure 1 GRQ₄) with the gatekeeper id of an appropriate full fledge gatekeeper outside its own domain. In advance the lightweight gatekeeper must have gained knowledge of valid gatekeepers outside its domain (information like IP address). The method for gaining and updating the knowledge of external gatekeepers is described in the text below, in connection with the discussion of Figure 4. In addition, each time an endpoint connects to the lightweight gatekeeper, the lightweight gatekeeper should use the same signals, i.e. GRQ (see Figure 1 GRQ₂) and GCF (see Figure 1 GRQ₃), towards the real gatekeepers e.g. to check which gatekeepers that allow the endpoint to be connected.

Figure 1 only indicates one possible scenario on how the lightweight gatekeeper communicates with the real gatekeepers. Alternatively the internal gatekeeper may directly provide the address of an external gatekeeper in the GCF towards the endpoint as a response to the GRQ. Figure 2 indicates how the arrangement is deployed when taking ISPs, LAN and Internet into account.

### Information flow between the lightweight gatekeeper and the real gatekeepers

Several alternatives exist regarding how often the lightweight gatekeeper ought to communicate with the external gatekeepers and hence update the internal tables:
1) The lightweight gatekeeper may update its internal tables statically, i.e. by management. An example of a static configuration setting may be that between 0800 and 1000 a certain external gatekeeper doesn't want to handle GRQs coming from the lightweight gatekeeper.
2) The lightweight gatekeeper may update its internal tables partly dynamically, i.e. on each GCF and GRJ received from the real gatekeepers.
3) The lightweight gatekeeper may frequently send GRQs to the real gatekeepers based on information on already registered endpoints. This interaction would be superfluous if it was not for that the response (GCF) should contain information on QoS etc. in the nonStandardData field. This approach ensures that the lightweight gatekeeper may update its internal tables not only each time an endpoint registers towards an external gatekeeper. Hence the lightweight gatekeeper, dependent of the frequency, has valid knowledge of the external gatekeeper's QoS etc.
4) Other H.225 or H.245 messages might be utilised for such information exchange, e.g. the H.225's IRQ (InfoRequest) and IRR (InfoResponse)
5) Other ways of exchanging such information also exist. Examples may be to use other protocols like TCP, UDP or such as Java/RMI, CORBA etc.

Any combination of the above mentioned approaches might be applied. Besides, information on a client's willingness to pay might be forwarded in the GRQ message, see next chapter.

### Information flow between endpoints and the lightweight gatekeeper

Information that might flow from endpoints to the lightweight gatekeeper is e.g. willingness to pay information. Hence the lightweight gatekeeper, dependent of the frequency, has valid knowledge of the endpoints, e.g. willingness to pay.

The way in which this information might be exchanged is according to those mechanism described in previous chapter.

### Which real gatekeeper to put an endpoint in touch with

Another issue is which real gatekeeper the lightweight gatekeeper should put an endpoint in contact with. Alternatives may be:
1) Forward the GRQ to a randomly picked real gatekeeper
2) Forward the GRQ based on internal information. Examples of internal information might be QoS, load, cost, time of day etc.
3) Forward the GRQ to a specific real gatekeeper on the basis of other criterias
4) By forward is meant explicitly, i.e. plain forward of the GRQ to an external gatekeeper, or implicitly, i.e. the address of the external gatekeeper is directly provided in the internal gatekeeper's GCF towards the endpoint

### Advantage

Such an extremely lightweight gatekeeper is *trivial to implement* and only needs small amount of memory and CPU power. Due to these modestly demanding requirements it *does not have to execute on dedicated hardware (PCs, workstations etc.)* An advantage that is a consequence of the lightweight approach is that e.g. a small company that thinks it is too costly to put up an own local gatekeeper might initiate contracts with one or several gatekeeper providers.

Such a distributed approach is *trivial to maintain* due to the fact that all the endpoints only needs to know about one gatekeeper, i.e. the lightweight gatekeeper. If the endpoints communicate directly with the real gatekeepers, the endpoints have to be reconfigured depending on which gatekeepers they want to communicate with.

*Information of the (current) cost* of using the different full fledge gatekeepers might also be provided by the same approach as described for load balancing and QoS.

### Information flow between the lightweight gatekeeper and the real gatekeepers

Several alternatives exist regarding how often the lightweight gatekeeper ought to communicate with the external gatekeepers and hence update the internal tables:
1) The lightweight gatekeeper may update its internal tables statically, i.e. by management. An example of a static configuration setting may be that between 0800 and 1000 a certain external gatekeeper doesn't want to handle GRQs coming from the lightweight gatekeeper.
2) The lightweight gatekeeper may update its internal tables partly dynamically, i.e. e.g. on GCF, GRJ and RAI received from the real gatekeepers.
3) Other H.225 or H.245 messages might be utilised for such information exchange, e.g. the H.225's IRQ (InfoRequest) and IRR (InfoResponse)
4) Other ways of exchanging such information also exist. Examples may be to use other protocols like TCP, UDP or such as Java/RMI, CORBA etc.

Any combination of the above mentioned approaches may be applied. Besides, information on a client's willingness to pay might be forwarded in the GRQ message, see next chapter.

### Information flow between endpoints and the lightweight gatekeeper

Information that might flow from endpoints to the lightweight gatekeeper is e.g. willingness to pay information. Hence the lightweight gatekeeper, dependent of the frequency, has valid knowledge of the endpoints, e.g. willingness to pay.

The way in which this information might be exchanged is according to those mechanism described in previous chapter.

### Which real gatekeeper to put an endpoint in touch with

Another issue is which real gatekeeper the lightweight gatekeeper should put an endpoint in contact with. Alternatives may be:
1) Forward the GRQ to a randomly picked real gatekeeper
2) Forward the GRQ based on internal information. Examples of internal information might be QoS, load, cost, time of day etc.
3) Forward the GRQ to a specific real gatekeeper on the basis of other criterias
4) By forward is meant explicitly, i.e. plain forward of the GRQ to an external gatekeeper, or implicitly, i.e. the address of the external gatekeeper is directly provided in the internal gatekeeper's GCF towards the endpoint

### Advantages

Such an extremely lightweight gatekeeper is *trivial to implement* and only needs small amount of memory and CPU power. Due to these modestly demanding requirements it *does not have to execute on dedicated hardware (PCs, workstations etc.)* An advantage that is a consequence of the lightweight approach, is that e.g. a small company that thinks it is too costly to put up an own local gatekeeper might initiate contracts with one or several gatekeeper providers.

Such a distributed approach is *trivial to maintain* due to the fact that all the endpoints only needs to know about one gatekeeper, i.e. the lightweight gatekeeper. If the endpoints communicate directly with the real gatekeepers, the endpoints have to be reconfigured depending on which gatekeepers they want to communicate with.

This invention has the great advantage that it allows a system of multiple gatekeepers to distribute load evenly, thereby reducing call setup time and improving the total possible utilization compared to the statical endpoint-gatekeeper relationship.

Further the gatekeepers are able to recover automatically after a crash, without any external intervention.

Another advantage of the invention is the possibility of transferring registered endpoints from one gatekeeper to another.

### References

[1] " Call Signaling Protocols and Media Stream Pack-etization for Packet Based Multimedia Communications Systems" , DRAFT ITU-T Recommendation H.225.0, Version 2

## Claims

1. Internal gatekeeper (1) for distributing and dispatching traffic in a network, which traffic is based on ITU-T-recommendation H.323,
**characterized in that** it is arranged in a specific domain (2), and is adapted to put an endpoint (3) of its domain in contact with an external real gatekeeper (4) outside said domain, and **in that** it supports a subset of the H.323 message set used by any endpoint (3,6) when registering to an external real gatekeeper, which subset includes GRQ, - Gatekeeper Request -, GCF - Gatekeeper Confirm -, GRJ - Gatekeeper Reject -, IRR - Information Request Response -, IRQ - Information Request -, RAI - Resource Availability Indication -, RAC - Resource Availability Confirm -, RRQ - Registration Request -, RCF - Registration Confirm -, RRJ - Registration Reject.

2. Internal gatekeeper as claimed in claim 1,
**characterized in that** it is arranged to maintain a list or table of valid real gatekeepers, and each external real gatekeeper (4,5) is arranged to register an internal gatekeeper (1) during start-up.

3. Internal gatekeeper as claimed in claim 2,
**characterized in that** said table is supplemented with resource information indicating the load on each particular real gatekeeper (4,5).

4. Internal gatekeeper as claimed in claim 3,
**characterized in that** said table is supplemented with information relating to QoS, quality of service, and cost.

5. Internal gatekeeper as claimed in claim 4,
**characterized in that** a proprietary non-StandardData field of the GCF and GRJ messages are used for exchanging information between an internal gatekeeper (1) and any external real gatekeeper (4,5), which field is used to convey information used in said supplementary fields of said table.

6. Internal gatekeeper as claimed in claim 5,
**characterized in that** the proprietary non-StandardData field of the GRQ message is used by a client to communicate a desired cost level, type of QoS, etc., of the external real gatekeeper (4,5) in question.

7. Internal gatekeeper as claimed in claim 5 or 6,
**characterized in that** the first byte of the nonStandardData field in the GCF message is arranged to contain an integer indicating the load on the real gatekeeper (4,5).

8. Internal gatekeeper as claimed in any of the claims 2-7,
**characterized in that** its (1) internal table is updated statically.

9. Internal gatekeeper as claimed in any of the claims 2-7,
**characterized in that** its (1) internal table is updated dynamically on GCF, GRJ and RAI received from any external real gatekeeper (4,5).

10. Internal gatekeeper as claimed in any of the claims 1-9,
**characterized in that** it (1) is adapted to put an endpoint (3,6) in contact with an external real gatekeeper (4,5) by forwarding the GRQ to a randomly picked external real gatekeeper (4,5).

11. Internal gatekeeper as claimed in any of the claims 1-9,
**characterized in that** it (1) is adapted to put an endpoint (3,6) in contact with an external real gatekeeper (4,5), by forwarding the GRQ based on information in said internal table.

12. Internal gatekeeper as claimed in any of the preceding claims,
**characterized in that** it (1) is adapted to communicate with a plurality of endpoints (3,6), said plurality of endpoints (3,6) only knowing about said one internal gatekeeper (1) and thereby avoiding reconfiguration.

13. A method for distributing and dispatching traffic in a network employing an internal gatekeeper (1), which traffic is based on ITU-T-recommendation H.323,
**characterized in that** the internal gatekeeper (1) is arranged in a specific domain, where the method comprises the steps of:
putting an endpoint (3) of its domain (2) in contact with an external real gatekeeper(4) outside said domain, and
supporting a subset of the H.323 message set used by any endpoint (3,6) when registering to an external real gatekeeper (4), which subset includes GRQ, - Gatekeeper Request -, GCF - Gatekeeper Confirm -, GRJ - Gatekeeper Reject -, IRR - Information Request Response -, IRQ - Information Request -, RAI - Resource Availability Indication -, RAC - Resource Availability Confirm -, RRQ - Registration Request -, RCF - Registration Confirm -, RRJ - Registration Reject.

14. A method as claimed in claim 13,
**characterized in** the steps of:
maintaining a list or table of valid real gatekeepers (4,5), and
each external real gatekeeper (4,5) registers an internal gatekeeper (1) during start-up.

15. A method as claimed in claim 14,
**characterized in** the step of: supplementing said table with resource information indicating the load on each particular real gatekeeper (4,5).

16. A method as claimed in claim 14,
**characterized in** the step of: supplementing said table with information relating to QoS, quality of service, and cost.

17. A method as claimed in claim 15 or 16,
**characterized in that** using a proprietary nonStandardData field of the GCF and GRJ messages for exchanging information between an internal gatekeeper (1) and any external real gatekeeper (4,5), which field is used to convey information used in said supplementary fields of said table.

18. A method as claimed in claim 17,
**characterized in that** a client uses the proprietary non-StandardData field of the GRQ message for communicating a desired cost level, type of QoS, etc., of the external real gatekeeper (4,5) in question.

19. A method as claimed in claim 17 or 18,
**characterized in that** arranging a first byte of the nonStandardData field in the GCF message to contain an integer indicating the load on the real gatekeeper (4,5).

20. A method as claimed in any of the claims 14-19,
**characterized in that** updating the internal table of the internal gatekeeper (1) statically.

21. A method as claimed in any of the claims 14-19,
**characterized in that** updating the internal table of the internal gatekeeper (1) dynamically on GCF, GRJ and RAI received from any external real gatekeeper.

22. A method as claimed in any of the claims 13-21,
**characterized in** the step of:
adapting the internal gatekeeper (1) to put an endpoint in contact with an external real gatekeeper by forwarding the GRQ to a randomly picked external real gatekeeper.

23. A method as claimed in any of the claims 13-22,
**characterized in** the step of:adapting the internal gatekeeper (1) to put an endpoint (3,6) in contact with an external real gatekeeper, by forwarding the GRQ based on information in said internal table.

24. A method as claimed in any of the claims 13-23,
**characterized in** the step of:
adapting the internal gatekeeper (1) to communicate with a plurality of endpoints (3,6), said plurality of endpoints (3,6) only knowing about said one internal gatekeeper (1) and thereby avoiding reconfiguration.

## Patentansprüche

1. Interner Gatekeeper (1) zum Verteilen und Absenden von Verkehr in einem Netz, wobei der Verkehr auf ITU-T Empfehlung H.323 basiert,
**dadurch gekennzeichnet, dass** er in einer bestimmten Domäne (2) angeordnet ist und dazu angepasst ist, einen Endpunkt (3) seiner Domäne mit einem externen realen Gatekeeper (4) außerhalb der Domäne in Kontakt zu bringen, und dass er eine Teilmenge der H.323-Nachrichtenmenge unterstützt, die von irgendeinem Endpunkt (3, 6) beim Registrieren bei einem externen realen Gatekeeper benutzt wird, wobei die Teilmenge enthält: GRQ - Gatekeeper Request (Gatekeeper-Anforderung) -, GCF - Gatekeeper Confirm (Gatekeeper-Bestätigung) -, GRJ - Gatekeeper Reject (Gatekeeper-Ablehnung) -, IRR - Information Request Response (Antwort auf Informationsanforderung) -, IRQ - Information Request (Informationsanforderung) -, RAI - Resource Availability Indication (Ressourcenverfügbarkeitsanzeige) -, RAC - Resource Availability Confirm (Ressourcenverfügbarkeitsbestätigung), RRQ - Registration Request (Registrieranforderung) -, RCF - Registration Confirm (Registrierbestätigung) -, RRJ - Registration Reject (Registrierablehnung).

2. Interner Gatekeeper nach Anspruch 1,
**dadurch gekennzeichnet, dass** er dazu angeordnet ist, eine Liste oder Tabelle von gültigen realen Gatekeepern zu pflegen, und dass jeder externe reale Gatekeeper (4, 5) dazu angeordnet ist, einen internen Gatekeeper (1) beim Start zu registrieren.

3. Interner Gatekeeper nach Anspruch 2,
**dadurch gekennzeichnet, dass** die Tabelle durch Ressourceninformation ergänzt wird, die die Belegung eines jeden bestimmten realen Gatekeepers (4, 5) anzeigt.

4. Interner Gatekeeper nach Anspruch 3,
**dadurch gekennzeichnet, dass** die Tabelle durch Information ergänzt wird, die QoS (Dienstgüte) und Kosten betrifft.

5. Interner Gatekeeper nach Anspruch 4,
**dadurch gekennzeichnet, dass** ein propritäres NonStandardData-Feld der GCF- und GRJ-Nachrichten benutzt wird, um Information zwischen einem internen Gatekeeper (1) und einem externen realen Gatekeeper (4, 5) auszutauschen, wobei das Feld benutzt wird, um in den Ergänzungsfeldern der Tabelle benutzte Information zu transportieren.

6. Interner Gatekeeper nach Anspruch 5,
**dadurch gekennzeichnet, dass** das propritäre NonStandardData-Feld der GRQ-Nachricht von einem Client benutzt wird, um ein erwünschtes Kostenniveau, einen QoS-Typ usw. des betreffenden externen realen Gatekeepers (4, 5) zu kommunizieren.

7. Interner Gatekeeper nach Anspruch 5 oder 6,
**dadurch gekennzeichnet, dass** das erste Byte des NonStandardData-Felds in der GCF-Nachricht dazu angeordnet ist, eine ganze Zahl zu enthalten, die die Belegung des realen Gatekeepers (4, 5) anzeigt.

8. Interner Gatekeeper nach einem der Ansprüche 2-7,
**dadurch gekennzeichnet, dass** seine (1) interne Tabelle statisch aktualisiert wird.

9. Interner Gatekeeper nach einem der Ansprüche 2-7,
**dadurch gekennzeichnet, dass** seine (1) interne Tabelle auf von einem externen realen Gatekeeper (4, 5) empfangenen GCF, GRJ und RAI dynamisch aktualisiert wird.

10. Interner Gatekeeper nach einem der Ansprüche 1-9,
**dadurch gekennzeichnet, dass** er (1) dazu angepasst ist, einen Endpunkt (3, 6) durch Weiterleiten der GRQ an einen zufällig ausgewählten externen realen Gatekeeper (4, 5) mit einem externen realen Gatekeeper (4, 5) in Kontakt zu bringen.

11. Interner Gatekeeper nach einem der Ansprüche 1-9,
**dadurch gekennzeichnet, dass** er (1) dazu angepasst ist, einen Endpunkt (3, 6) durch Weiterleiten der GRQ auf der Basis von Information in der internen Tabelle mit einem externen realen Gatekeeper (4, 5) in Kontakt zu bringen.

12. Interner Gatekeeper nach einem der vorhergehenden Ansprüche,
**dadurch gekennzeichnet, dass** er (1) dazu angepasst ist, mit einer Vielzahl von Endpunkten (3, 6) zu kommunizieren, wobei die Vielzahl von Endpunkten (3, 6) nur von dem einen internen Gatekeeper (1) Kenntnis haben und **dadurch** Rekonfiguration vermeiden.

13. Verfahren zum Verteilen und Absenden von Verkehr in einem Netz, das einen internen Gatekeeper (1) einsetzt, wobei der Verkehr auf ITU-T Empfehlung H.323 basiert,
**dadurch gekennzeichnet, dass** der interne Gatekeeper (1) in einer bestimmten Domäne (2) angeordnet ist, wo das Verfahren folgende Schritte umfasst:
einen Endpunkt (3) seiner Domäne (2) mit einem externen realen Gatekeeper (4) außerhalb der Domäne in Kontakt zu bringen, und
eine Teilmenge der H.323-Nachrichtenmenge zu unterstützten, die von irgendeinem Endpunkt (3, 6) beim Registrieren bei einem externen realen Gatekeeper (4) benutzt wird, wobei die Teilmenge enthält: GRQ - Gatekeeper Request (Gatekeeper-Anforderung) -, GCF - Gatekeeper Confirm (Gatekeeper-Bestätigung) -, GRJ - Gatekeeper Reject (Gatekeeper-Ablehnung) -, IRR - Information Request Response (Antwort auf Informationsanforderung) -, IRQ - Information Request (Informationsanforderung) -, RAI - Resource Availability Indication (Ressourcenverfügbarkeitsanzeige) -, RAC - Resource Availability Confirm (Ressourcenverfügbarkeitsbestätigung), RRQ - Registration Request (Registrieranforderung) -, RCF - Registration Confirm (Registrierbestätigung) -, RRJ - Registration Reject (Registrierablehnung).

14. Verfahren nach Anspruch 13,
durch folgende Schritte **gekennzeichnet**:
Pflegen einer Liste oder Tabelle von gültigen realen Gatekeepern (4, 5), und
jeder externe reale Gatekeeper (4, 5) registriert einen internen Gatekeeper (1) beim Start.

15. Verfahren nach Anspruch 14,
durch folgenden Schritt **gekennzeichnet**: Ergänzen der Tabelle durch Ressourceninformation, die die Belegung eines jeden bestimmten realen Gatekeepers (4, 5) anzeigt.

16. Verfahren nach Anspruch 14,
durch folgenden Schritt **gekennzeichnet**: Ergänzen der Tabelle durch Information, die QoS (Dienstgüte) und Kosten betrifft.

17. Verfahren nach Anspruch 15 oder 16,
**dadurch gekennzeichnet, dass** ein propritäres NonStandardData-Feld der GCF- und GRJ-Nachrichten benutzt wird, um Information zwischen einem internen Gatekeeper (1) und einem externen realen Gatekeeper (4, 5) auszutauschen, wobei das Feld benutzt wird, um in den Ergänzungsfeldern der Tabelle benutzte Information zu transportieren.

18. Verfahren nach Anspruch 17,
**dadurch gekennzeichnet, dass** ein Client das propritäre NonStandardData-Feld der GRQ-Nachricht benutzt, um ein erwünschtes Kostenniveau, einen QoS-Typ usw. des betreffenden externen realen Gatekeepers (4, 5) zu kommunizieren.

19. Verfahren nach Anspruch 17 oder 18,
**dadurch gekennzeichnet, dass** ein erstes Byte des NonStandardData-Felds in der GCF-Nachricht dazu angeordnet ist, eine ganze Zahl zu enthalten, die die Belegung des realen Gatekeepers (4, 5) anzeigt.

20. Verfahren nach einem der Ansprüche 14-19,
**dadurch gekennzeichnet, dass** die interne Tabelle des internen Gatekeepers (1) statisch aktualisiert wird.

21. Verfahren nach einem der Ansprüche 14-19,
**dadurch gekennzeichnet, dass** die interne Tabelle des internen Gatekeepers (1) auf von einem externen realen Gatekeeper empfangenen GCF, GRJ und RAI dynamisch aktualisiert wird.

22. Verfahren nach einem der Ansprüche 13-21,
durch folgenden Schritt **gekennzeichnet**: den internen Gatekeeper (1) dazu anpassen, einen Endpunkt durch Weiterleiten der GRQ an einen zufällig ausgewählten externen realen Gatekeeper mit einem externen realen Gatekeeper in Kontakt zu bringen.

23. Interner Gatekeeper nach einem der Ansprüche 13-22,
durch folgenden Schritt **gekennzeichnet**: den internen Gatekeeper (1) dazu anpassen, einen Endpunkt (3, 6) durch Weiterleiten der GRQ auf der Basis von Information in der internen Tabelle mit einem externen realen Gatekeeper in Kontakt zu bringen.

24. Interner Gatekeeper nach einem der Ansprüche 13-23,
durch folgenden Schritt **gekennzeichnet**: den internen Gatekeeper (1) dazu anpassen, mit einer Vielzahl von Endpunkten (3, 6) zu kommunizieren, wobei die Vielzahl von Endpunkten (3, 6) nur von dem einen internen Gatekeeper (1) Kenntnis haben und **dadurch** Rekonfiguration vermeiden.

## Revendications

1. Portier interne (1) pour distribuer et expédier un trafic sur un réseau, lequel trafic est basé sur la recommandation H.323 de l'ITU-T,
**caractérisé en ce qu'**il est agencé dans un domaine spécifique (2), et est adapté pour mettre un point d'extrémité (3) de son domaine en contact avec un portier réel externe (4) à l'extérieur dudit domaine, et **en ce qu'**il prend en charge un sous-ensemble de l'ensemble de messages H.323 utilisé par un quelconque point d'extrémité (3, 6) lors de son enregistrement auprès d'un portier réel externe, lequel sous-ensemble comprend une GRQ - demande de portier -, une GCF - confirmation de portier -, un GRJ - rejet de portier -, une IRR - réponse à une demande d'informations -, une IRQ - demande d'informations -, une RAI - indication de disponibilité de ressources -, une RAC - confirmation de disponibilité de ressources -, une RRQ - demande d'enregistrement -, une RCF - confirmation d'enregistrement -, un RRJ - rejet d'alignement.

2. Portier interne selon la revendication 1,
**caractérisé en ce qu'**il est agencé pour maintenir une liste ou une table de portiers réels valides, et chaque portier réel externe (4, 5) est agencé pour enregistrer un portier interne (1) pendant le démarrage.

3. Portier interne selon la revendication 2,
**caractérisé en ce que** ladite table est complétée avec des informations de ressources indiquant la charge sur chaque portier réel (4, 5) particulier.

4. Portier interne selon la revendication 3,
**caractérisé en ce que** ladite table est complétée avec des informations concernant la QoS, qualité de service, et le coût.

5. Portier interne selon la revendication 4,
**caractérisé en ce qu'**un champ non-StandardData propriétaire des messages GCF et GRJ est utilisé pour échanger des informations entre un portier interne (1) et tout portier réel externe (4, 5), lequel champ est utilisé pour transporter des informations utilisées dans lesdits champs supplémentaires de ladite table.

6. Portier interne selon la revendication 5,
**caractérisé en ce que** le champ non-StandardData propriétaire du message GRQ est utilisé par un client pour communiquer un niveau de coût, un type de QoS, etc. souhaités, du portier réel externe (4, 5) en question.

7. Portier interne selon la revendication 5 ou 6,
**caractérisé en ce que** le premier octet du champ non-StandardData dans le message GCF est agencé pour contenir un nombre entier indiquant la charge du portier réel (4, 5).

8. Portier interne selon l'une quelconque des revendications 2 à 7,
**caractérisé en ce que** sa (1) table interne est mise à jour statiquement.

9. Portier interne selon l'une quelconque des revendications 2 à 7,
**caractérisé en ce que** sa (1) table interne est mise à jour dynamiquement sur une GCF, un GRJ et une RAI reçus d'un quelconque portier réel externe (4, 5).

10. Portier interne selon l'une quelconque des revendications 1 à 9,
**caractérisé en ce qu'**il (1) est adapté pour mettre un point d'extrémité (3, 6) en contact avec un portier réel externe (4, 5) en acheminant la GRQ vers un portier réel externe (4, 5) choisi de manière aléatoire.

11. Portier interne selon l'une quelconque des revendications 1 à 9,
**caractérisé en ce qu'**il (1) est adapté pour mettre un point d'extrémité (3, 6) en contact avec un portier réel externe (4, 5), en acheminant la GRQ sur la base d'informations de ladite table interne.

12. Portier interne selon l'une quelconque des revendications précédentes,
**caractérisé en ce qu'**il (1) est adapté pour communiquer avec une pluralité de points d'extrémité (3, 6), ladite pluralité de points d'extrémité (3, 6) ne connaissant que ledit portier interne (1) et évitant de ce fait une reconfiguration.

13. Procédé pour distribuer et expédier un trafic sur un réseau en utilisant un portier interne (1), lequel trafic est basé sur la recommandation H.323 de l'ITU-T,
**caractérisé en ce que** le portier interne (1) est agencé dans un domaine spécifique (2), où le procédé comprend les étapes consistant à :
mettre un point d'extrémité (3) de son domaine (2) en contact avec un portier réel externe (4) à l'extérieur dudit domaine, et
prendre en charge un sous-ensemble de l'ensemble de messages H.323 utilisé par tout point d'extrémité (3, 6) lors de son enregistrement auprès d'un portier réel externe (4), lequel sous-ensemble comprend une GRQ - demande de portier -, une GCF - confirmation de portier -, un GRJ - rejet de portier -, une IRR - réponse à une demande d'informations -, une IRQ - demande d'informations -, une RAI - indication de disponibilité de ressources -, une RAC - confirmation de disponibilité de ressources -, une RRQ - demande d'enregistrement -, une RCF - confirmation d'enregistrement -, un RRJ - rejet d'enregistrement.

14. Procédé selon la revendication 13,
**caractérisé par** les étapes consistant à :
maintenir une liste ou une table de portiers réels (4, 5) valides, et
chaque portier réel externe (4, 5) enregistre un portier interne (1) pendant le démarrage.

15. Procédé selon la revendication 14,
**caractérisé par** l'étape consistant à : compléter ladite table avec des informations de ressources indiquant la charge sur chaque portier réel (4, 5) particulier.

16. Procédé selon la revendication 14,
**caractérisé par** l'étape consistant à : compléter ladite table avec des informations concernant la QoS, qualité de service, et le coût.

17. Procédé selon la revendication 15 ou 16,
**caractérisé par** l'utilisation d'un champ non-StandardData propriétaire des messages GCF et GRJ pour échanger des informations entre un portier interne (1) et tout portier réel externe (4, 5), lequel champ est utilisé pour transporter des informations utilisées dans lesdits champs supplémentaires de ladite table.

18. Procédé selon la revendication 17,
**caractérisé en ce qu'**un client utilise le champ non-StandardData propriétaire du message GRQ pour communiquer un niveau de coût, un type de QoS, etc. souhaités, du portier réel externe (4, 5) en question.

19. Procédé selon la revendication 17 ou 18,
**caractérisé par** l'agencement d'un premier octet du champ non-StandardData dans le message GCF pour contenir un entier indiquant la charge sur le portier réel (4, 5).

20. Procédé selon l'une quelconque des revendications 14 à 19,
**caractérisé par** la mise à jour de la table interne du portier interne (1) statiquement.

21. Procédé selon l'une quelconque des revendications 14 à 19,
**caractérisé par** la mise à jour de la table interne du portier interne (1) dynamiquement sur une GCF, un GRJ et une RAI reçus d'un quelconque portier réel externe.

22. Procédé selon l'une quelconque des revendications 13 à 21,
**caractérisé par** l'étape consistant à : adapter le portier interne (1) pour mettre un point d'extrémité en contact avec un portier réel externe en acheminant la GRQ vers un portier réel externe choisi de manière aléatoire.

23. Procédé selon l'une quelconque des revendications 13 à 22,
**caractérisé par** l'étape consistant à : adapter le portier interne (1) pour mettre un point d'extrémité (3, 6) en contact avec un portier réel externe, en acheminant la GRQ sur la base d'informations de ladite table interne.

24. Procédé selon l'une quelconque des revendications 13 à 23,
**caractérisé par** l'étape consistant à : adapter le portier interne (1) pour communiquer avec une pluralité de points d'extrémité (3, 6), ladite pluralité de points d'extrémité (3, 6) ne connaissant que ledit portier interne (1) et évitant de ce fait une reconfiguration.
